(19) Europäisches Patentamt
European Patent Office
Office européen des brevets

(11) EP 3 435 066 A1

(12) EUROPEAN PATENT APPLICATION

(43) Date of publication:
30.01.2019 Bulletin 2019/05

(51) Int Cl.:
G01N 13/00 (2006.01)
G01N 15/00 (2006.01)
G01N 35/08 (2006.01)
G06N 3/02 (2006.01)
G06F 17/18 (2006.01)
G01N 15/02 (2006.01)
G01N 21/31 (2006.01)

(21) Application number: 17183874.1

(22) Date of filing: 28.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Malvern Panalytical Limited
Malvern, Worcestershire WR14 1XZ (GB)

(72) Inventor: BARKER, David
Malvern, Worcestershire WR14 1XZ (GB)

(74) Representative: Barker Brettell LLP
100 Hagley Road
Edgbaston
Birmingham B16 8QQ (GB)

(54) **ARTIFICIAL NEURAL NETWORK FOR ANALYSING PARTICLE DIFFUSION PROPERTIES**

(57) A method of using a computer (304) to classify measurement data (241) obtained by Taylor Dispersion Analysis, the measurement data (241) comprising a time series of measurements obtained as a sample flows past a detector, the method comprising:

obtaining the measurement data (241) from a Taylor Dispersion Analysis;

applying a neural network (130) to the measurement data (241) to classify the measurement data (241), wherein the neural network (130) has been trained to identify at least one class of TDA measurement.

Figure 3

Figure 4

**Description**

The present invention relates to a method and apparatus for determining particle characteristics, and more specifically to a methods and apparatus for classifying measurement types.

It is not uncommon for measurement data in particle characterisation (e.g. of particle size) to be difficult to interpret. An inexperienced user may not recognise features of measurement data that are characteristic of a particular type of sample, or of a particular issue that may occur in a measurement. An expert user who understands the measurement process is likely to be able to recognise issues with measurement data and correctly interpret the results, but there is the potential for less expert users to obtain incorrect or misleading measurements because they have not recognised an issue.

For example, in Taylor Dispersion Analysis (TDA), an expert will typically recognise by inspection of the measurement data when the sample has multiple components. A less experienced user may not recognise this. It is possible to fit a single component model to a two component measurement result, but the results obtained from such a fit will not accurately reflect the characteristics of either component.

An automatic approach that seeks to classify multiple components can suffer from over-fitting. A two-component fit to a single component measurement can produce a lower residual than a (correct) single component fit.

The potential for erroneous measurements from inexperienced users increases the cost of particle/sample characterisation, because it means that highly skilled and experienced staff may be necessary to run and/or supervise measurements.

A solution to at least some of the above mentioned problems is desirable.

According to a first aspect, there is provided a method of using a computer to classify measurement data obtained by Taylor Dispersion Analysis, the measurement data comprising a time series of measurements obtained as a sample flows past a detector, the method comprising:

obtaining the measurement data from a Taylor Dispersion Analysis;
applying a neural network to the measurement data to classify the measurement data, wherein the neural network has been trained to identify at least one class of TDA measurement type.

TDA measurement types may include at least one of: multi-component data; sample sticking; convective-dispersive data; buffer mismatch; lack of signal.

The method may comprise a further step of selecting a subset of the measurement data, wherein applying a neural network to the measurement data comprises applying the neural network to the subset of the measurement data.

The method may comprise a further step of down-sampling or decimating the subset of the measurement data to produce a reduced data set, wherein applying the neural network to the measurement data comprises applying the neural network to the reduced data set.

The number of samples in the reduced data set may be between 50 and 200. The number of samples may be more than 200, for example a few thousand samples may be used.

Selecting the subset of the measurement data may comprise excluding at least some baseline data in the measurement data from the subset thereof.

Selecting a subset of the measurement data may comprise selecting data with an absorbance value above a threshold value.

Selecting a subset of the measurement data may comprise determining a baseline trend by calculating a fit to a portion of the measurement data (for example, an initial portion and a final portion of the measurement data). The fit may be linear. The initial portion and final portion may each comprise 10% or less of the total measurement data. Selecting a subset may further comprise producing corrected measurement data by subtracting the baseline trend from the measurement data

Selecting a subset may further comprise calculating smoothed measurement data. Calculating smoothed measurement data may comprise using a moving average filter on the corrected measurement data. The width of the filter may be between 5 and 15 seconds.

Selecting a subset may further comprise finding an average value for the corrected or smoothed measurement data, and identifying at least one candidate data region that deviates from the average value by more than a threshold deviation. The average may be a mean value.

The threshold deviation may be derived from the corrected measurement data. The threshold deviation may be a number of standard deviations of the corrected measurement data. The number of standard deviations may be between 4 and 6 (including fractional values)..

Selecting a subset may comprise removing isolated short portions of the at least one candidate data region and including short gaps in the at least one candidate data region, wherein short portions and short gaps have a duration of less than a threshold duration. The threshold duration may be 1 second or less.

Selecting a subset of the measurement data may comprise:

selecting a best set of the at least one candidate data region so as to maximise a score which is determined for a given set of candidate data regions by:

for a region of the corrected measurement data that starts with the start of the first candidate data region in the given set and ends with the end of the last candidate data region in the given set, incrementing the score based on the duration of the corrected measurement that deviates from the average value by more than the threshold deviation, and decrementing the score based on the duration of the corrected measurement that does not deviate from the average value by more than the threshold deviation;

selecting the subset of the measurement data to start with the start of the first candidate region and end with the end of the last candidate data region of the best set.

The decrementing and incrementing may be weighted by different amounts.

The method may comprises reporting a classification result.

According to a second aspect, there is provided a method of characterising a sample, comprising performing TDA on a sample to obtain measurement data, then using the method of the first aspect to classify the measurement data.

The method may comprise processing at least some of the measurement data to determine characteristics of the sample, the processing responsive to the classification.

Characteristics of the sample may include at least one of: hydrodynamic radius, viscosity, concentration of a molecular species, mutual diffusion coefficient, and self-diffusion coefficient.

The method may comprise training the neural network to recognise the at least one class of TDA measurement type.

The method may comprise generating synthetic set of training measurements by modelling the measurement process.

Training may comprise using a logistic cost function to adjust weights and/or bias terms to reduce error in recognising classes of TDA measurements.

Training may comprise calculating partial derivatives of the cost function with respect to the weights and/or parameters.

Training may comprise adjusting the weights and/or bias terms based on the partial derivatives in order to minimise the cost function.

According to a third aspect, there is provided an instrument for characterising particles by Taylor dispersion analysis, comprising: a light source, a capillary, a detector and a processor; wherein:

the light source is arranged to illuminate the capillary with light;
the detector is configured to detect light from the light source that has interacted with a sample in the capillary, and to provide measurement data to the processor;
the processor is configured with a neural network for classifying the measurement data to determine a class of measurement type, and to process the measurement data to determine particle size information.

The neural network may be configured to determine a class of measurement.

The instrument may comprise a user interface for training the neural network based on a user defined class of measurement type. The instrument may comprise a synthetic measurement generator for generating training data by modelling the measurement process. The modelling of the measurement process may be based on user provided parameters. The user may thereby tailor the functioning of the neural network to match the parameters that are observed in their own data. The instrument may be configured to enable the user to train the neural network base on a library of measurement results with classifications already assigned (e.g. by the user, or by an expert user).

Processing of the measurement data to determine particle size information may be responsive to a result of the classification.

The detector may be configured to detect light absorbed or refracted from the sample in the capillary.

The instrument may comprise a pump, and the instrument may be configured to flow the sample through the capillary and past the detector, the detector configured to detect light transmitted from the light source through the sample.

The processor may be configured to perform the method of the first and/or second aspect.

Example embodiments of the invention will now be described, with reference to the accompanying drawings, in which:

Figure 1 is an example two-component TDA trace;

Figure 2 is an example single component TDA trace with a single component fit;

Figure 3 is the same single component TDA trace that is shown in Figure 2, with a two-component fit (which is over-fitted);

Figure 4 is a generalised diagram of an example neural network, illustrating input, hidden and output layers;

Figure 5 is an example neuron of a neural network for use according to an embodiment;

Figure 6 is an example simplified neural network with an input vector of length 3, one hidden layer, and a single output node;

Figure 7 is an example of a slightly more complex neural network with two hidden layers;

Figure 8 is a graph illustrating the value of a cost function $J_\theta$ with respect to an output $h(x)$ for a given input $x$;

Figure 9 is a block diagram of apparatus according to an embodiment;

Figure 10 is a block diagram of a method according to an embodiment;

Figure 11 is a graph of 'vanilla' single component TDA measurement data, and a further graph of the subset of the data (or region of interest) selected therefrom;

Figure 12 is a graph showing two component TDA measurement data, and a further graph of the subset of the data selected therefrom;

Figure 13 is a graph showing 'sticking' TDA measurement data, and a further graph of the subset of the subset of the data selected therefrom;

Figure 14 is a graph showing convective dispersive TDA measurement data, and a further graph of the subset of the data selected therefrom;

Figure 15 is a graph showing TDA measurement data with a buffer mismatch, and a further graph of the subset of the data selected therefrom;

Figure 16 is a graph showing TDA measurement data corresponding with baseline/noise only, and a further graph of the subset of the data selected therefrom;

Figure 17 is an example of TDA measurement data for a two-component, sticking, buffer mismatched sample, the subset of the data selected therefrom, and the results of analysing the subset of the data with a neural network to identify the measurement characteristics;

Figure 18 is a first graph showing raw measurement data, fitted data, and a baseline fit produced by fitting to the fitted data; and a second graph of corrected measurement data, obtained by subtracting the baseline fit from the raw measurement data;

Figure 19 is a graph showing corrected measurement data, and smoothed corrected measurement data; and

Figure 20 is a bar chart showing accuracy, sensitivity and specificity of a trained neural network to a range of sample classes.

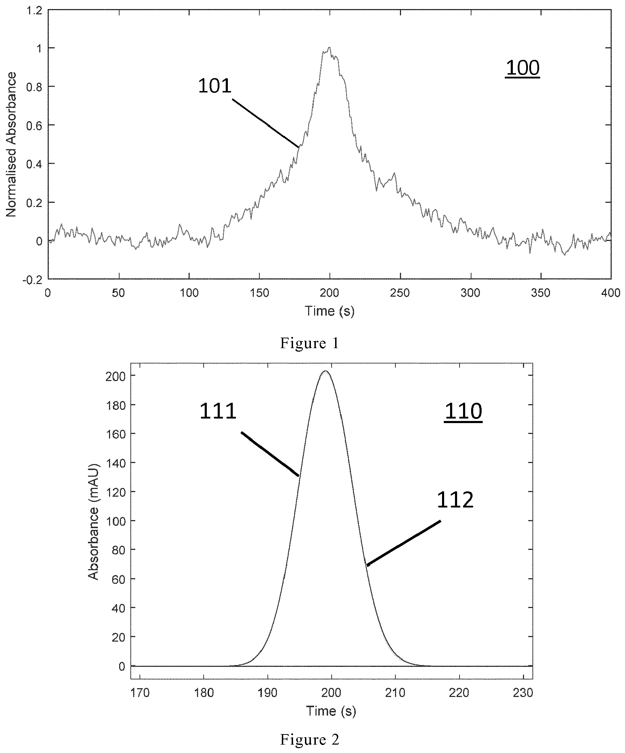

Figure 1 is a graph 100 of a (somewhat noisy) two-component trace 101 obtained by performing a Taylor Dispersion Analysis. To a person with expert knowledge of Taylor dispersion, the fact that the trace results from a two-component mixture is fairly clear. However, a novice user may not recognise this. Applying a single component fit to two component data will produce results that are not accurate for either component. The present applicant has recognised that automatic recognition of measurement data (i.e. traces) with particular characteristics, such as two-component, sticking etc would be beneficial.

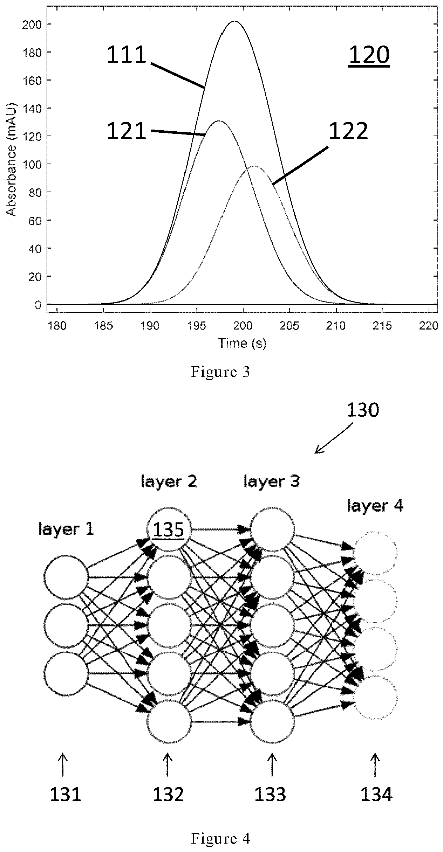

Figure 2 is a graph 110 of a single component trace 111, with a single component fit 112 (which cannot easily be distinguished from the trace 111 in Figure 2). The particle size corresponding with the single component fit is 0.328 nm, and the residual error between the single component fit and the trace is 2404 mAU (milli-absorbance units). The single component fit is a good match for the data. Nonetheless, a two-component fit can also be applied to the same data, as shown in Figure 3. This predicts a first component particle size of 0.254 nm and a second component particle size of 0.276 nm. The residual error for the two-component fit is actually smaller than that for the single component fit, at 1923 mAU. The two-component fit is therefore likely to score better on existing quality metrics for determining how "good" a fit is, but is the result of over-fitting to the data. It is therefore not particularly straightforward to automatically recognise issues with measurement data. It is not always possible to determine that an issue is present by trying different types of fits, and minimising the resulting error.

The applicant has identified that neural networks are a suitable approach for recognising measurement issues in TDA traces/measurement data.

All neural networks have a similar structure, consisting of three different types of layers: input, hidden and output. Figure 4 illustrates an example neural network 130 with three input nodes in the first layer 131, two hidden layers 132, 133, each with five neurons 135, and an output layer 134 with four output neurons.

**Input Layer:**

The input layer 131 is the input data that the neural network is analysing. The input data can be $n$ dimensional, but must be strung out into a vector for inputting into the neural network. Examples:

- Several features in one vector, e.g. hydrodynamic radius, arrival time, asymmetry factor...
- An image.
- Time series data - e.g. a trace from a TDA instrument.

Neural networks perform better (and are easier to train) if the input data are normalised in some way. For instance, all elements in the input vector may be scaled from 0 to 1 (this mainly speeds up training).

**Hidden Layer:**

This converts the input data into something the output layer can use to make a prediction.

Each neuron 135 in the network acts as a sort of feature detector for part of the input. For example, suppose the neural network is to be used to identify whether a picture is of a cat or a car. There may be three neurons 135 in the first hidden layer 132 that detect the presence of wheels, windows and headlights. These neurons are likely to respond strongly (e.g. provide an output close to 1) when shown a picture of a car and weakly to pictures of cats. The second hidden layer 133 is a function of the first layer 132, allowing for more complex feature combination. A neuron 135 in the second layer 133 could combine strong responses indicating the presence of both wheels and windows to generate a very strong response in favour of the image being a car.

Each neuron 135 in each hidden layer has a weight, which may be randomly initialised before training. This ensures all neurons will not be computing the exact same thing - symmetry breaking.

**Output Layer:**

The output layer 134 converts the output from the hidden layer(s) onto the desired scale of the output.

- Could be 0 to 1 for classification probability - e.g. 0.93 chance this data is one component.
- Could be continuous number in any range.

Artificial neurons 135 are the basis of neural networks - mathematical functions that attempt to model biological neurons. An artificial neuron 135 takes some input(s) (akin to dendrites), multiplies them by a weight, sums them and passes them through a non-linear activation function to produce an output (the neuron's axon).

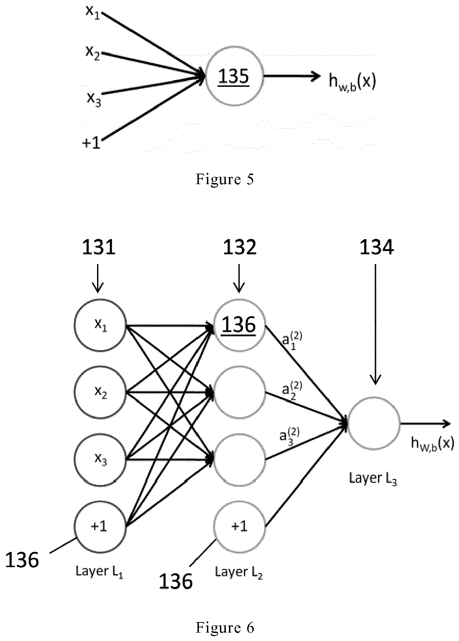

Figure 5 shows a neuron 135 with four inputs, $x_1$, $x_2$, $x_3$, and a +1 intercept term. The neuron outputs a value $h_{W,b}(x)$ based on parameters $W$ (weights) and $b$ (bias). The weight and bias parameters are fitted, and found by an optimisation algorithm.

In the example above, the neuron takes inputs $x_i$ and a +1 bias term, multiplies them by a corresponding weight $W_i$ and passes them through an activation function.

Common choices for the activation function are the sigmoid or hyperbolic tangent function, but there are many others.

For the above example:

$$h_{W,b}(x) = f(W^T x) = f\left(\sum_{i=1}^{3} W_i x_i + b\right)$$

Where *f* is the activation function. For example, for a sigmoid function,

$$f(z) = \frac{1}{1 + \exp(-z)}$$

and

$$f'(z) = f(z)\big(1 - f(z)\big)$$

For a hyperbolic tangent function,

$$f(z) = \tanh(z) = \frac{e^z - e^{-z}}{e^z + e^{-z}}$$

and

$$f'(z) = 1 - \big(f(z)\big)^2$$

The weight terms affect the sharpness of transition, with high weights corresponding with sharp transitions in the value of *f(z)*. The bias terms affect the value of *z* at which the transition in value occurs.

The structure of a neural network consists of multiple layers of neurons, hooked together so that the outputs of some neurons are the inputs of others. Referring to Figure 6, a simple neural network is shown, in which there are 16 weights to learn. The network structure comprises

- An input layer $L_1$ 131 comprising a feature vector *x* of length 3 ($x_1$, $x_2$, $x_3$).
- One hidden layer 132 ($L_2$) which consists of 3 neurons 136.
- A single output node in the output layer 134 $L_3$.
- An intercept/bias term of +1 is added to the input layer and all hidden layers.

This network has a total of 16 weights to learn - each line from the input and hidden layer has a weight associated with it.

The weight and bias terms may be combined into a single parameter vector *θ*:

$$\theta = [W, b]$$

The computational steps involved in the previous example network are:

- For the neurons 136 in layer $L_2$ 132, compute the total weighted sum $z^{(2)}$ of the inputs and their associated weights:

$$z^{(2)} = W^{(1)} x + b^{(1)}$$

- Pass the weighted sum $z^{(2)}$ through a nonlinear activation function *f(·)*, such as a sigmoid, to calculate the activation $a^{(2)}$ from layer 2:

$$a^{(2)} = f\big(z^{(2)}\big)$$

- Find the total weighted sum in layer 3 $z^{(3)}$ by taking the neuron activations from layer $L_2$ $a^{(2)}$ and their associated weights:

$$z^{(3)} = W^{(2)}a^{(2)} + b^{(2)}$$

- The overall output from the network $h_{W,b}(x)$ (which could be a probability that $x$ belongs to some class for example) is then:

$$h_{W,b}(x) = a^{(3)} = f\big(z^{(3)}\big)$$

Note: the steps above comprise vector-matrix operations.

The steps above illustrate what is happening in a feedforward neural network. To generate useful predictions/outputs, a feedforward network first has to be trained (typically in a supervised fashion).

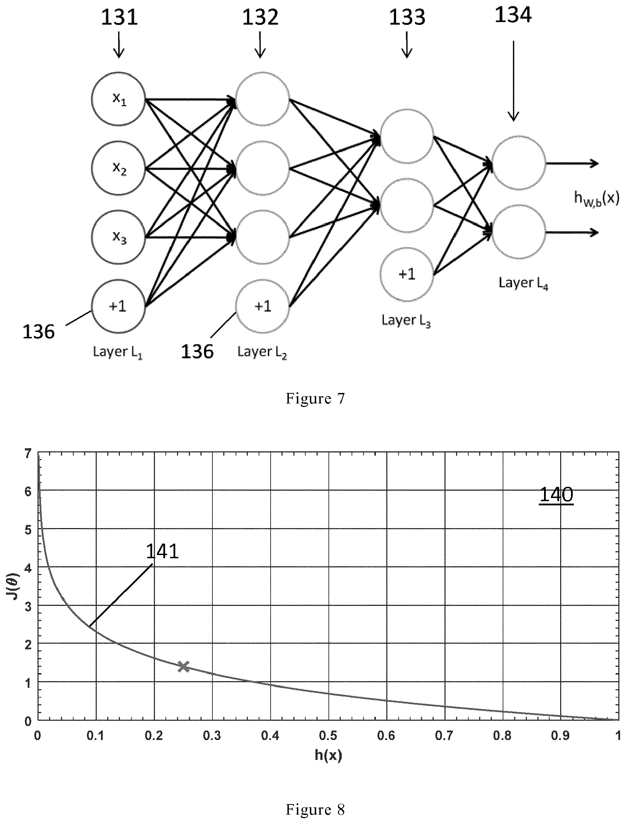

Figure 7 illustrates a more complicated neural network, with two hidden layers 132, 133 and two outputs in the output layer 134. There are 26 weights to be learned for this network.

**Training**

The backpropagation algorithm is one method for training a neural network - it is a supervised learning method so the training data must be classified/labelled correctly.

A training set may be provided, composed of $m$ training examples $x$ with corresponding labels/targets $y$:

$$\left\{\left(x^{(1)}, y^{(1)}\right), \quad ..., \quad \left(x^{(m)}, y^{(m)}\right)\right\}$$

As described above, an input can be fed forward through a neural network to generate an output.

Suppose the inputs are images, and the aim is to classify whether the image is of a cat or not - there is one output from the neural network. A given image $x$ may be of a cat, so $y = 1$.

Applying the image to the network may result in an output of 0.25 - the neural network returns a fairly low probability that the image is of a cat.

The output from the network can be compared with the known class of the input data (or label), and an error determined. The error, and the partial derivative of the error with respect to the network parameters (weights and biases), can be used to train the network (i.e. varying the weights and biases), or logistic cost $J_\theta$ (sum of residuals squared or logistic cost) of the network can be computed:

Logistic cost:

$$J(W,b) = J(\theta) = -\frac{1}{m}\sum_{i=1}^{m}\left[y^{(i)}\log\left(h_\theta\big(x^{(i)}\big)\right) + \left(1 - y^{(i)}\right)\log\left(1 - h_\theta\big(x^{(i)}\big)\right)\right] + \frac{\lambda}{2m}\sum_{j=1}^{n}\theta_j^2$$

The logistic cost includes terms that relate to the difference between the output and the label of the training data, and a regularisation term that includes the weight decay parameter $\lambda$. The regularisation term helps to prevent the neural network overfitting the training data by keeping the magnitude of the weights relatively small, allowing the network to more accurately predict the output of new unseen inputs.

Adding regularisation has the effect that a trained neural network tends to use all of its neurons a bit, rather than heavily weighting the output of a few neurons.

Training the neural network comprises adjusting the weights and bias terms (collectively $\theta$) to better predict the correct classification - minimise $J(\theta)$. This can be done by calculating derivatives of the cost with respect to the weights and bias terms, and using a gradient descent algorithm to efficiently minimise the cost $J(\theta)$:

$$\frac{\partial}{\partial W_{ij}^{(l)}} J(W,b) = \left[\frac{1}{m}\sum\nolimits_{i=1}^{m} \frac{\partial}{\partial W_{ij}^{(l)}} J\big(W,b; x^{(i)},y^{(i)}\big)\right] + \lambda W_{ij}^{(l)}$$

$$\frac{\partial}{\partial b_{i}^{(l)}} J(W,b) = \frac{1}{m}\sum\nolimits_{i=1}^{m} \frac{\partial}{\partial b_{i}^{(l)}} J\big(W,b; x^{(i)},y^{(i)}\big)$$

NB - regularisation is applied to weights, but not bias terms.

In the backpropagation algorithm, an error delta $\delta_i^{(l)}$ is determined for every neuron in each layer. This error indicates how responsible that neuron was for the wrong prediction.

In the last layer, this is fairly trivial to calculate:

$$\delta^{(n_l)} = a^{(n_l)} - y$$

Essentially, this is the activations in the last layer minus the true target value.

For error values in the hidden layers, the error delta can be computed by using an equation that back propagates the preceding error through the layers:

$$\delta^{(l)} = \left(\big(\theta^{(l)}\big)^{T}\delta^{(l+1)}\right) .* f'\big(z^{(l)}\big)$$

$f'(z^{(l)})$ is the derivative of the activation function. If using the sigmoid function, this can be shown to be:

$$f'\big(z^{(l)}\big) = a^{(l)} .* \big(1 - a^{(l)}\big)$$

So the error term for the inner nodes can be computed by:

$$\delta^{(l)} = \left(\big(\theta^{(l)}\big)^{T}\delta^{(l+1)}\right) .* a^{(l)} .* \big(1 - a^{(l)}\big)$$

To calculate the partial derivatives, the activations of each node must be multiplied by the error of that node: the result is equal to the partial derivative.

$$\frac{\partial J(\theta)}{\partial \theta_{i,j}^{(l)}} = \frac{1}{m}\sum_{t=1}^{m} a_j^{(t)(l)} \delta_i^{(t)(l+1)}$$

The total cost $J(\theta)$ and the partial derivatives of the cost $\frac{\partial J(\theta)}{\partial \theta}$ can be used by minimisation algorithm (Levenberg-Marquardt for example) to reduce the total error efficiently by altering the weights, allowing the neural network to "learn" and make accurate predictions.

Figure 8 shows a graph 140 illustrating the relationship 141 between the logistic cost and the output $h(x)$.

Notation:

| | |
|---|---|
| $x$ | Input features for a training example, $x \in \mathbb{R}^n$. |
| $y$ | Output/target values. Here, $y$ can be vector valued. In the case of an autoencoder, $y = x$. |
| $(x^{(i)}, y^{(i)})$ | The $i$-th training example |

(continued)

| $h_{W,b}(x)$ | Output of our hypothesis on input $x$, using parameters $W$, $b$. This should be a vector of the same dimension as the target value $y$. |
|---|---|
| $W_{ij}^{(l)}$ | The parameter associated with the connection between unit $j$ in layer $l$, and unit $i$ in layer $l$ + 1. |
| $b_i^{(l)}$ | The bias term associated with unit $i$ in layer $l$ + 1. Can also be thought of as the parameter associated with the connection between the bias unit in layer $l$ and unit $i$ in layer $l$ + 1. |
| $\theta$ | Our parameter vector. It is useful to think of this as the result of taking the parameters $W$, $b$ and "unrolling" them into a long column vector. |
| $a_i^{(l)}$ | Activation (output) of unit $i$ in layer $l$ or the network. In addition, since layer $L_1$ is the input layer, we also have $a_i^{(1)} = x_i$. |
| $f(\cdot)$ | The activation function. Throughout these notes, we used $f(z) = \tanh(z)$. |
| $z_i^{(l)}$ | Total weighted sum of inputs to unit $i$ in layer $l$. Thus, $a_i^{(l)} = f(z_i^{(l)})$. |
| $\alpha$ | Learning rate parameter |
| $s_l$ | Number of units in layer $l$ (not counting the bias unit). |
| $n_l$ | Number layers in the network. Layer $L_1$ is usually the input layer, and layer $L_{nl}$ the output layer. |
| $\lambda$ | Weight decay parameter. |
| $\hat{x}$ | For an autoencoder, its output; i.e., its reconstruction of the input $x$. Same meaning as $h_{W,b}(x)$. |
| $\rho$ | Sparsity parameter, which specifies our desired level of sparsity |
| $\hat{\rho}_i$ | The average activation of hidden unit $i$ (in the sparse autoencoder). |
| $\beta$ | Weight of the sparsity penalty term (in the sparse autoencoder objective). |

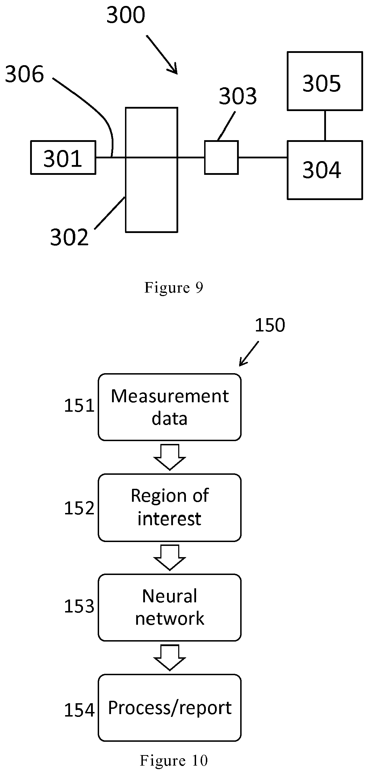

Referring to Figure 9, an instrument 300 is shown according to an embodiment, comprising: a light source 301, sample cell 302, light detector 303, processor/computer 304 and display 305.

The sample cell 302 may be part of a capillary, and the instrument may be configured to perform a Taylor dispersion analysis, by flowing a liquid through a capillary (driven by a pump).

Taylor dispersion analysis can be used to analyse properties of species within a sample. A plug of the sample may be injected into a capillary and subsequently disperse as it traverses along the capillary within a laminar flow regime. The injected plug of the sample may be narrow (having a short duration) this being referred to as a pulse of the sample, resulting in a pulse TDA. Alternatively the injected plug of the sample may be long (i.e. having a longer duration) this may be referred to as a slug of the sample, resulting in a frontal TDA. The degree of dispersion exhibited by the plug is dependent on the diffusivity of the molecules within the plug and can be measured at one or multiple points downstream of the injection site. A concentration detector, responsive to the species of the sample, may be positioned at one or more locations downstream of the injection location. The concentration detector or detectors (e.g. a UV-Visible spectrophotometer) may thereby produce a signal that is proportional (or otherwise related) to the concentration of the molecules in each cross-section of the flow past the detector. The signal from the detector, which may be referred to as a Taylorgram, may thereby correspond with a temporally-resolved distribution of molecular concentration.

The instrument 300 may comprise a pump (not shown) for causing the fluid flow within the capillary.

The detector 303 may be positioned adjacent a window in the capillary. The detector 303 may be configured to determine a concentration of molecules within the capillary at the window (e.g. based on absorbance, refraction etc).

The capillary may link a first and second container. Liquid may be driven (e.g. at constant pressure) from the first container to the second container. The first container may contain a run (or carrier) solution so that the capillary is initially filled with the run solution. The first container may then be disconnected from the capillary, and a third container connected that contains a sample solution. The sample may be a pharmaceutical or biopharmaceutical species dissolved either in the run/carrier solution, or in a different medium. The different medium may differ from the run/carrier solution in having an excipient, e.g. a salt or a sugar, dissolved at a different concentration than in the carrier/run solution. This is may be appropriate in formulations which are designed to stabilise active drug species.

A first and second window may be spaced apart along the length of the capillary between the first and second containers. The capillary may be formed in a loop so that the first and second both window may be imaged using a single optical assembly, for instance by arranging for them to be adjacent to one another in an area imaged by the pixel array of an area imaging detector. In other embodiments, the detector may comprise a single element, rather than a pixel array. The first and second window will thereby correspond with different residence times in the capillary.

To inject a plug of the sample into the capillary, the third container may be connected to the capillary and then disconnected after a suitable volume of the sample has been injected under pressure. The second container may be connected to the capillary when the third container is disconnected from the capillary. The detector 303 may capture a sequence comprising measures of the received light intensity at the detector as the pulse of sample solution or the flow front passes the first and second window. The detector output thereby provides data on absorbance versus time. In alternative embodiments, the detector 303 may be configured to detect the refractive properties of the solute, and thus to determine the concentration of the solute passing the measuring position.

Measurement data from the detector 303 (or detectors) is passed to a computer/processor 304, which is configured to use a neural network to process the measurement data to determine whether any particular classification can be applied to the data (which might affect how the data should be processed to determine particle characteristics). The computer/processor 304 may utilise any classification made by the neural network to determine how to process the measurement data to determine particle characteristics. The computer/processor 304 may be configured to report any classification information via the display 305, which may also be used to report sample characteristics (such as particle size, diffusion properties etc).

Figure 10 is a flow diagram of a method 150 for processing measurement data to determine a class of measurement type. The method comprises obtaining measurement data 151 (for example a time history of absorbance or refractive index as liquid flows past a detector window). Subsequently, a step 152 of identifying a region of interest or subset of the measurement data occurs. The region of interest comprises relevant data for analysis by the neural network. In the case of a Taylor dispersion, the relevant data for analysis is that which corresponds with the pulse or front of the sample as it flows past the detector.

A number of different techniques may be used to identify the relevant data. Simple thresholding is problematic, because buffer mismatch, gradual trending of the data and spikes all introduce or omit relevant data. Gradient thresholding is an alternative, but this tends to give a poor result with noisy data. A further alternative is to use an estimate of the arrival time to determine an appropriate region of interest, based on knowledge of the measurement conditions and the speed of flow of the sample from the injection point through the capillary to the measurement location. This approach typically achieves something useful, but can include too much baseline, or crop the relevant data from the sample if more diffusion than expected has occurred. A further alternative is to use a Gaussian fit to identify the location of peaks in the data first, and then to determine a relevant region using the identified peaks. This approach generally picks a sensible region, but can show large variation with badly behaved data (e.g. exhibiting at least one of the measurement issues discussed herein).

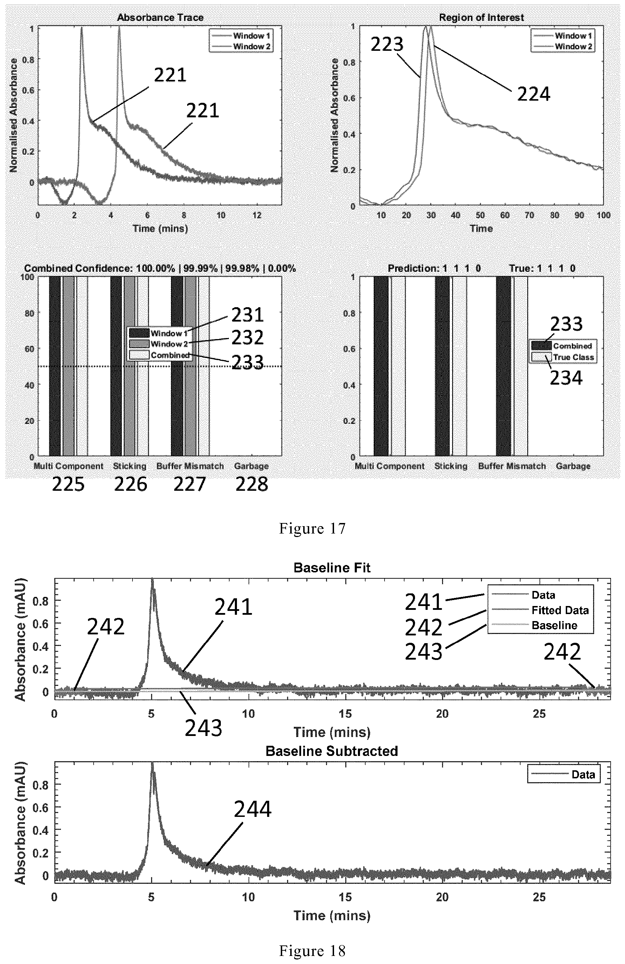

In one embodiment, the first step in identifying the relevant subset of data is removing any variation in the baseline measurement. One way of doing this is illustrated in Figure 18, which shows raw measurement data 241 and a baseline fit 243 to the raw measurement data 241.

For a pulse Taylorgram, the baseline fit 243 may be a linear fit to a start and end region of the raw measurement data, depicted in Figure 18 as the fitted data 242. The fitted data 242 may comprise the first 5% and the last 5% of the raw measurement data (or some other percentage less than 10%). For a frontal Taylorgram, the baseline fit would be based on a different region of the data. For example, a baseline fit can be performed to the initial 10% (or some other %) of the data, and the resulting fit subtracted from the data to remove a trend of offset in the baseline.

Baseline corrected measurement data 244 is obtained by subtracting the baseline fit 243 from the raw measurement data 241.

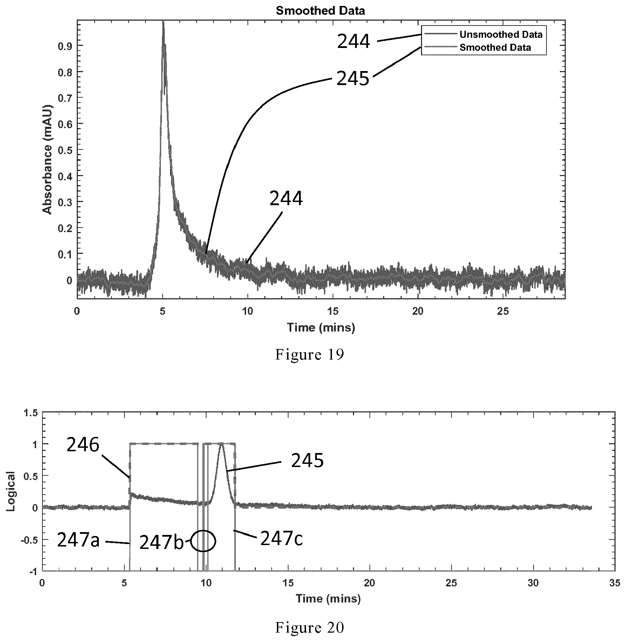

The corrected measurement data 244 may subsequently be smoothed, as illustrated in Figure 19, which includes the corrected measurement data 244 and smoothed data 245 determined therefrom. In this example an averaging filter with a window time of 10 seconds is used to smooth the data, but a different window size may be used (window sizes of between 5 and 15 seconds have been found to be particularly appropriate). The smoothing operation removes high frequency noise, while retaining the low frequency measurement data that is characteristic of the particle properties under analysis.

Deviations of the smoothed measurement 245 from the baseline or from an average value of the smoothed measurement tend to indicate signal from the sample, which is the relevant data for analysis by the neural network. In order to identify this data, a threshold may be used. The threshold may be based on the statistical properties of the smoothed measurement data, such as a number of standard deviations (e.g. five, or between four and six) away from the baseline or a mean value of the smoothed data.

The result of such a thresholding operation may indicate that a number of blocks of data exceed the threshold. A contiguous set of smoothed measurement data that is most likely to correspond with signal from the sample should be selected from these blocks.

One way of achieving this is by producing a logical vector corresponding to whether the smoothed data exceeds the threshold (e.g. 5 standard deviations from the mean). Small blips(spikes or drops) in the logical vector can be removed by using a moving median filter (e.g. with width 20, corresponding with around 1 second of data). The edges of the logical vector, where a transition occurs, can be identified.

The optimal pair of edges on the logical vector may then be identified that include the maximum amount of data of interest (indicated as true in the logical vector). A scoring system can be used to achieve this, in which a score is incremented for every true element of the logical vector between the two edges, and decremented for every false element of the logical vector between the two edges. The pair of edges that produce the maximum score can be used to define the start and end of the subset of data (or region of interest) for analysis by the neural network. In some embodiments it may be appropriate to apply different weights to true and false values of the logical vector.

Figure 20 illustrates smoothed measurement data 245 and the edges 247a, 247b, 247c of a logical vector produced by comparing this smoothed measurement data with a threshold. The region of interest 246 that is selected by edges 247a and 247c according to the scoring method described above is also shown.

In order to make the neural network more computationally efficient, the subset of data may be subsampled (e.g. decimated). Alternatively, the smoothed data 245 may have already been subsampled (e.g. by decimating the corrected measurement data 244 rather than smoothing it in a way that retains all the measurement points). It has been found that a set of around 100 data points strikes a good compromise between capturing sufficient detail of the measurement data to enable accurate classification while minimising the complexity of the neural network. The number of samples in the data provided as an input to the neural network may be less than 500, or less than 300. In other embodiments the number of samples may be larger, for example more than 500, or more than 1000.

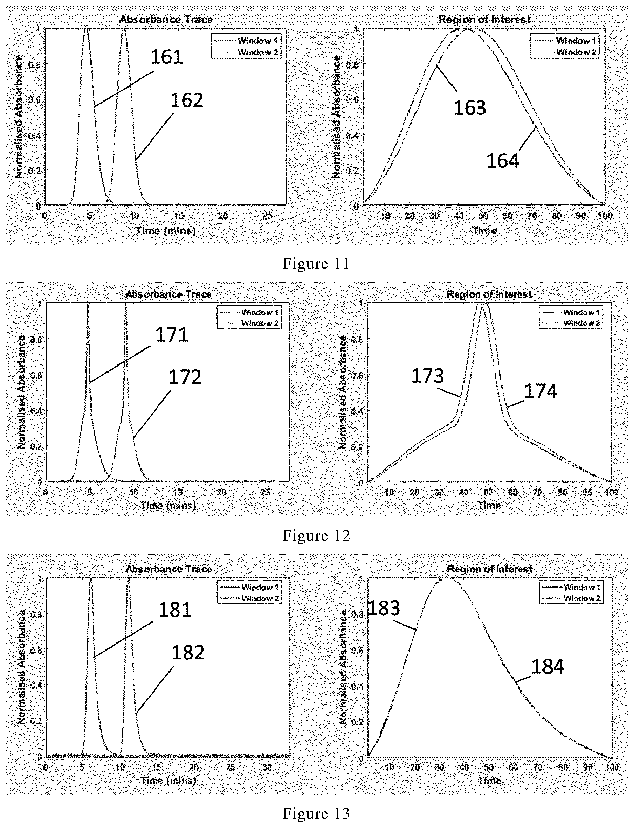

Figures 11 to 16 illustrate the operation of the method described above in selecting a relevant subset of measurement data for different classes of Taylor dispersion measurement.

Figure 11 shows raw measurement data from a first and second detection window 161, 162, and the corresponding selected regions of interest 163, 164 for a 'vanilla' single component measurement in which none of the measurement issues described herein are present.

Figure 12 shows raw measurement data from a first and second detection window 171, 172, and the corresponding selected regions of interest 173, 174 for a two component measurement in which none of the other measurement issues described herein are present.

Figure 13 shows raw measurement data from a first and second detection window 181, 182, and the corresponding selected regions of interest 183, 184 for a two component measurement in which none of the other measurement issues described herein are present.

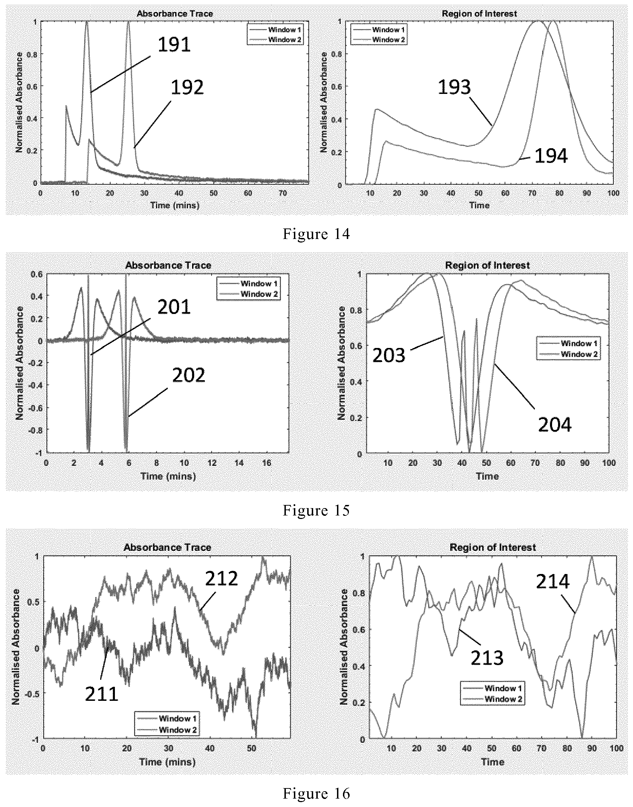

Figure 14 shows raw measurement data from a first and second detection window 191, 192, and the corresponding selected regions of interest 193, 194 for a sticking measurement (in which sample molecules are sticking to the capillary as a result of electrostatic interactions) in which none of the other measurement issues described herein are present. None of the other measurement issues are present in this data.

Figure 15 shows raw measurement data from a first and second detection window 201, 202, and the corresponding selected regions of interest 203, 204 for a buffer mismatched measurement in which none of the other measurement issues described herein are present.

Figure 16 shows raw measurement data from a first and second detection window 211, 212, and the corresponding selected regions of interest 213, 214 for a baseline only measurement (e.g. corresponding with a blocked capillary). The measurement is simply noise, and the selected region of interest in this case is a smoothed version of the whole signal.

In each of the cases shown in Figures 11 to 16, the correct subset of the measurement data was automatically selected by the example method described above. The region of interest selection method described is therefore robust and generally applicable to a broad range of measurement classes.

The neural network may be trained by generating synthetic traces by modelling a set of measurement results that include one or more of the following classes (as well as 'vanilla' measurements): multi-component sample; sticking, convective dispersive, buffer mismatch, baseline only (e.g. blocked capillary). A region of interest from each synthetic measurement can automatically be determined (e.g. as described above). Since the measurement is synthetic, the classes present are known a priori, and a neural network can therefore be trained by modifying weights to minimise errors in identifying the synthetic measurement data. The training process may proceed until the network starts to produce reliable results, or over a predetermined number of synthetic measurements. The distribution of classes in the training data set may be used to influence the degree to which the training of the network emphasises false positives and correct identification of potentially problematic measurement classes.

Figure 17 illustrates the application of a region selection algorithm and trained neural network to a sample trace that includes more than one issue. The sample trace in this case is buffer mismatched, two-component and sticking. Figure 17 shows raw measurement data 221, 222 corresponding with a first and second measurement window, and a the corresponding subsets 223, 224 of the measurement data.

The result of applying a trained neural network is shown in the lower graphs. The confidence levels 225, 226, 227, 228 for the respective classes of multi-component, sticking, buffer mismatch and baseline/noise are shown for each window, and for the combination of confidence levels from the first and second window.

The neural network indicated a 100% combined confidence that the measurement data was two-component, a 99.99% combined confidence that data was sticking, a 99.98% combined confidence that the data was buffer mismatched, and a 0% combined confidence that the data was just a baseline. The neural network therefore successfully identified the classes associated with this challenging measurement data.

The method (including automatic region selection and classification using a neural network) was further tested by applying it to 2158 real traces obtained by Taylor dispersion measurement A very low false positive rate of identification as two-component (or some other class, in error) is desirable. The data in the set included samples comprising (but is not limited to): caffeine, lysozyme (treated not to stick), BSA, latex beads.

Figure 20 shows the accuracy 261, sensitivity 262, and specificity 253 of the neural network in identifying that measuremenst belong to the classes: none (i.e. no-problems), multi-component, sticking, convective-dispersive, buffer mismatched, and baseline/noise.

The results are encouraging, and are summarised in the below table. The network is particularly good at identifying data that has no problems (i.e. single component, with no issues like sticking, convective-dispersive, buffer mismatch etc). In all problem classes (i.e. classes other than "none") the network has an accuracy of 78% or greater. Multi component and buffer mismatch are lower in accuracy and this is perhaps understandable. The transition from good data into these problems can be difficult to define with precision. Even experts may disagree or be uncertain of the true classification. It is speculated that the relatively low sensitivity to convective dispersive traces (the lowest metric in the table above) may be improved by tweaking the region selection algorithm to avoid this only picking out the dispersed peak from the whole trace and not the convective front.

| Trace Problem | Positive Samples | Negative Samples | True Positives | True Negatives | False Positives | False Negatives | Accuracy | Sensitivity | Specificity |
|---|---|---|---|---|---|---|---|---|---|
| None | 1000 | 1158 | 976 | 1039 | 119 | 24 | 0.93 | 0.98 | 0.90 |
| Multi Component | 145 | 2013 | 113 | 1560 | 453 | 32 | 0.78 | 0.78 | 0.77 |
| Sticking | 576 | 1582 | 518 | 1566 | 16 | 58 | 0.97 | 0.90 | 0.99 |
| Convective Dispersive | 75 | 2083 | 44 | 2072 | 11 | 31 | 0.98 | 0.59 | 0.99 |
| Buffer Mismatch | 214 | 1944 | 191 | 1588 | 356 | 23 | 0.82 | 0.89 | 0.82 |
| Baseline | 250 | 1908 | 177 | 1888 | 20 | 73 | 0.96 | 0.71 | 0.99 |

The above examples are not intended to be limiting, and are provided in order to help the skilled person understand the invention, which is limited only by the appended claims.

**Claims**

1. A method of using a computer to classify measurement data obtained by Taylor Dispersion Analysis, the measurement data comprising a time series of measurements obtained as a sample flows past a detector, the method comprising:

   obtaining the measurement data from a Taylor Dispersion Analysis;
   applying a neural network to the measurement data to classify the measurement data, wherein the neural network has been trained to identify at least one class of TDA measurement.

**2.** The method of claim 1, wherein the classes include at least one of: multi-component data; sample sticking; convective-dispersive data; buffer mismatch; lack of signal.

**3.** The method of claim 1 or 2, further comprising the step of selecting a subset of the measurement data, wherein applying a neural network to the measurement data comprises applying the neural network to the subset of the measurement data.

**4.** The method of any preceding claim, including the step of down-sampling or decimating the subset of the measurement data to produce a reduced data set, wherein applying the neural network to the measurement data comprises applying the neural network to the reduced data set.

**5.** The method claim 3 or 4, wherein selecting a subset of the measurement data comprises determining a baseline trend by calculating a fit to a portion of the measurement data.

**6.** The method of claim 5, wherein selecting a subset further comprises producing corrected measurement data by subtracting the baseline trend from the measurement data.

**7.** The method of any of claims 3 to 5, wherein selecting a subset further comprises calculating smoothed measurement data.

**8.** The method of claim 6 or 7, wherein selecting a subset further comprises finding an average value for the corrected or smoothed measurement data, and identifying at least one candidate data region that deviates from the average value by more than a threshold deviation.

**9.** The method of claim 8, wherein the threshold deviation is derived from the corrected measurement data.

**10.** The method of claim 8 or 9, further comprising excluding isolated short portions of the at least one candidate data region and including short gaps in the at least one candidate data region, wherein short portions and short gaps have a duration of less than a threshold duration.

**11.** The method of any of claims 8 to 10, wherein selecting a subset of the measurement data comprises:

selecting a best set of the at least one candidate data region so as to maximise a score which is determined for a given set of candidate data regions by:

for a region of the corrected measurement data that starts with the start of the first candidate data region in the given set and ends with the end of the last candidate data region in the given set, incrementing the score based on the duration of the corrected measurement that deviates from the average value by more than the threshold deviation, and decrementing the score based on the duration of the corrected measurement that does not deviate from the average value by more than the threshold deviation;

selecting the subset of the measurement data to start with the start of the first candidate region and end with the end of the last candidate data region of the best set.

**12.** A method of characterising a sample, comprising performing TDA on a sample to obtain measurement data, then using the method of any preceding claim to classify the measurement data.

**13.** The method of claim 12, further comprising processing at least some of the measurement data to determine characteristics of sample, the processing responsive to the classification.

**14.** The method of any preceding claim, further comprising using a processor to generate a set of synthetic measurement data for training the neural network, based on a model of the measurement process and user provided parameters.

**15.** An instrument for characterising particles by determining particle characteristics by Taylor dispersion analysis, comprising: a light source, a capillary, a detector and a processor; wherein:

the light source is arranged to illuminate the capillary with light;
the detector is configured to detect light from the light source that has interacted with a sample in the capillary, and to provide measurement data to the processor;
the processor is configured with a neural network for classifying the measurement data to determine a class of measurement type in accordance with any of the preceding claims, and to process the measurement data to determine particle size information.

Figure 1

Figure 2

Figure 3

Figure 4

Figure 5

Figure 6

131      132      133      134

Figure 7

Figure 8

300

306

301

303

305

302

304

Figure 9

150

151 Measurement data

152 Region of interest

153 Neural network

154 Process/report

Figure 10

Figure 11

Figure 12

Figure 13

Figure 14

Figure 15

Figure 16

Figure 17

Figure 18

Figure 19

Figure 20

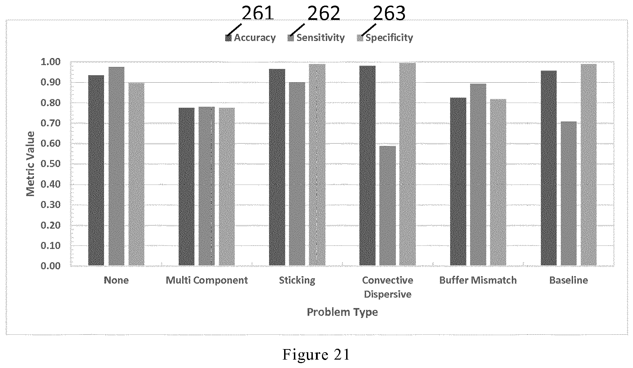

Figure 21

# EP 3 435 066 A1

**Europäisches Patentamt**
**European Patent Office**
**Office européen des brevets**

## EUROPEAN SEARCH REPORT

**Application Number**

EP 17 18 3874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 148 198 A1 (CENTRE NAT RECH SCIENT [FR]) 27 January 2010 (2010-01-27)<br>* paragraph [0002] - paragraph [0003] *<br>* paragraph [0020] *<br>* paragraph [0028] *<br>* paragraph [0035] - paragraph [0046] *<br>----- | 1-15 | INV.<br>G01N13/00<br><br>ADD.<br>G06F17/18<br>G01N15/00<br>G01N15/02<br>G01N35/08<br>G01N21/31<br>G06N3/02 |
| A | JOHN A. BURNS ET AL: "Feed-forward neural networks in chemistry: mathematical systems for classification and pattern recognition",<br>CHEMICAL REVIEWS,<br>vol. 93, no. 8,<br>1 December 1993 (1993-12-01), pages 2583-2601, XP055443602,<br>US<br>ISSN: 0009-2665, DOI: 10.1021/cr00024a001<br>* page 1 - right-hand column *<br>----- | 1-15 | |

**TECHNICAL FIELDS SEARCHED (IPC)**

G06F
G01N
G06N

The present search report has been drawn up for all claims

| Place of search | Date of completion of the search | Examiner |
|---|---|---|
| The Hague | 24 January 2018 | Mauritz, Jakob |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 3874

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2018

| Patent document cited in search report | | Publication date | Patent family member(s) | | Publication date |
|---|---|---|---|---|---|
| EP 2148198 | A1 | 27-01-2010 | EP | 2148198 A1 | 27-01-2010 |
| | | | EP | 2313768 A1 | 27-04-2011 |
| | | | US | 2011264380 A1 | 27-10-2011 |
| | | | WO | 2010009907 A1 | 28-01-2010 |

EPO FORM P0459

For more details about this annex : see Official Journal of the European Patent Office, No. 12/82